# EUROPEAN PATENT SPECIFICATION

(11) **EP 2 064 944 B1**
(45) Date of publication and mention of the grant of the patent: **23.02.2011**
(21) Application number: 08075869.1
(22) Date of filing: 10.11.2008
(51) Int. Cl.: A01K 1/10, A01K 5/02

(54) **Unmanned autonomous vehicle for displacing feed**
Unbemanntes, autonomes Fahrzeug zur Futterverteilung
Véhicule autonome sans pilote pour déplacer les aliments

(30) Priority: 29.11.2007 NL 1034771
(43) Date of publication of application: 03.06.2009
(73) Proprietor: Lely Patent N.V., 3147 PA Maassluis (NL)
(72) Inventor: Van den Berg, Karel, 2971 VB Bleskensgraaf (NL)
(74) Representative: Corten, Maurice Jean F.M.

(56) References cited:
- EP-A- 1 779 722
- WO-A-2007/120036
- DE-U- 29 800 152
- FR-A- 2 862 489

## Description

The invention relates to an unmanned autonomous vehicle according to the preamble of claim 1. The invention relates in particular to an unmanned autonomous vehicle, comprising two wheels, for substantially lateral displacement of feed lying on a ground, in particular by separate drive means, separately drivable wheels, a torque difference adjusting means for adjusting the torque difference between the wheels, a control unit for controlling the vehicle and moving it in a direction of travel, and feed displacing means for substantially lateral displacement of feed.

Such a vehicle is known from WO2007/12003

A drawback of the known vehicle is that its control is not very flexible. In particular, this control, at least the functioning of the vehicle, is passive, there being hardly any possibilities to adapt this functioning to other conditions of use or users' wishes.

It is an object of the invention to provide an unmanned vehicle of the mentioned type which enables a more manageable or at least more flexible functioning.

According to the present invention, this object is achieved by means of an unmanned autonomous vehicle as defined in claim 1. By making the lowest point of the feed displacing means adjustable to outside the centre line, it is achieved that the vehicle will be more flexibly controllable. For, in the case of the known vehicle, whose lowest point, if defined, lies in the front part at the height of the centre line, the feed displacing means provided for this vehicle will in principle be able to rotate in two directions, if a direction of rotation was not already defined by earlier encountered feed or the like. The direction of rotation depends on the exact place where the resistance is encountered. However, by means of the vehicle according to the present invention, it is possible to adjust the feed displacing means, in particular a lowest point thereof, in such a manner that the first encounter, for example at slowly increasing feed height, will take place with greater certainty at the desired side.

On the other hand, if for example the location of the feed does not cause problems in relation to a possible direction of rotation of the (one or more) feed displacing means, it may still be advantageous to displace a possible lowest point to the left or to the right. The result thereof is namely that, upon displacing feed by the feed displacing means, the feed can be lifted to some extent, so that it will remain, for example, sufficiently airy, or will at least allow a more even displacement. In particular if the location of the lowest point is adjustable during operation, because the adjusting device is arranged for this purpose, it will be possible to obtain such advantages. However, in general, it will be obvious that the functionality of the vehicle will be extended by the adjusting device and by the adjustability of the lowest point.

Moreover, it is pointed out that the vehicle known from WO2007/120036 does comprise an angle adjustment, but that, in this case, the lowest point continues to be located in principle at the same height and on the centre line, so that there is little flexibility.

Favourable embodiments of the present invention are described in the dependent claims, as well as hereinafter. In particular, the adjusting device comprises a heights adjustment. By means of said height adjustment it is, for example, possible to adjust a height of the lowest point of the feed displacing means. The ground clearance, for example, is adjusted in this manner, which may be practical in the case of an uneven ground, ridges and the like. It is also possible thus to achieve an adjustment of the feed displacing means, in particular of the lowest point thereof, which depends on the sort of feed. For, a fine powder feed may require a lower lowest point than a coarser feed.

Moreover, a height adjustment makes it possible to "lift" the feed displacing means, so that it will for example be possible for the vehicle to move to another site, in which case the feed displacing means will remain free from the ground between two working sites. This may, for example, result in a cleaner ground. Inversely, a displacement of the lowest point to the other side may cause both a compression of the feed and a very reliable displacement thereof.

In embodiments, the vehicle further comprises an additional supporting point, in particular a sliding shoe or a third wheel. Owing to this, the vehicle need, for example, no longer (also) be supported on the lowest point of the feed displacing means. Owing to some ground clearance, wear, for example, can be limited. This will also result in an improved controllability.

In embodiments, the adjusting device is arranged to adjust the height of at least one of a wheel and the additional supporting point. This makes it possible both to displace the lowest point of the feed displacing means to the left or to the right, and to adjust the height of the lowest point. For three effective supporting points a single adjustability is sufficient but, of course, such a height adjustability could also be provided for a plurality of wheels and/or supporting points.

In favourable embodiments, the adjusting device is arranged for an automatic height adjustment, in particular such an automatic height adjustment that the feed displacing means will exert a substantially constant pressure on a ground. This controls possible wear of the feed displacing means. On the other hand, if the pressure is zero, because there is for example a ground distance, the adjusting device may also be arranged to guarantee a constant ground clearance. For this purpose, the adjusting device may comprise a suitable sensor device, such as a pressure sensor, a resistance sensor or a feeler or a distance sensor, which measures the distance from the lowest point to the ground, such as, for example, a time-of-flight scanner, a laser scanner, etc.

As a sensor device there may also be provided a sensor means which recognizes the kind or condition of the ground, such as feed or sort of feed, or sand, a grid, etc. By means of a signal from such a sensor means it is possible for the control unit to set automatically the adjustment of the feed displacing means. Therefore, the vehicle advantageously comprises a sensor means which recognizes the kind or condition of the ground, the control device being arranged to adjust, by means of a signal from the sensor means, the height and/or the position of the feed displacing means, in particular of a lowest point thereof. The sensor means may, for example, comprise a camera with image recognition, a conductivity meter such as in a metal detector, etc. Alternatively, an ultrasonic distance meter may also be applied.

In embodiments, the vehicle comprises a distance determining means for determining the distance from the vehicle to a wall portion, the control unit being programmed in such a manner that, during operation, the vehicle will be kept at a distance determined by the distance determining means to the wall portion, which distance is greater than or equal to a pre-adjusted minimum distance to the wall portion. This ensures that the vehicle will be able to follow a "neat" route along the wall portion, and will, in principle, be able to position the feed evenly and at equal distances. An ultrasonic sensor may, for example, serve as a distance meter.

In an embodiment of an unmanned vehicle according to the invention, the torque difference adjusting means is provided with a torque difference determining means for determining the torque difference between the wheels. In this case, it is in particular preferred if the control unit is programmed in such a manner that, during operation, the drivable wheels of the vehicle will show a torque difference determined by the torque difference determining means, which difference is smaller than or equal to a pre-adjusted maximum torque. Controlling the unmanned vehicle on the basis of the torque difference ensures that the unmanned vehicle will in each case substantially laterally displace an at least substantially equal amount of feed, because the torque difference is precisely caused by and is proportional to the force required for displacing an amount of feed.

A particularly accurate lateral displacement of feed may be achieved if the unmanned vehicle is provided with an orientation determining means to determine the orientation of the centre line of the vehicle relative to the wall portion, the control unit being programmed in such a manner that, during operation, the centre line of the vehicle will remain in an orientation determined by the orientation determining means relative to the wall portion, which orientation is at least substantially equal to a pre-adjusted orientation.

In embodiments, the unmanned vehicle further comprises a touch protection which extends around the outer side of the vehicle and which is arranged to supply to the control unit a signal which depends on an encountered resistance or force or pressure. By means of such a protection, the vehicle is safer for the environment, in particular for persons. The protection may in particular comprise a ring having a conductive portion, the resistance of which portion changes by the exertion of a force or pressure, for example owing to the fact that two conductive portions come closer to each other. By measuring the resistance change, it is possible to determine a signal. It is thus possible for the control unit to perform a certain action in dependence on the generated signal, for example the size thereof.

In particular, the control unit is arranged to change the orientation when the signal exceeds a particular threshold, in particular to inverse the orientation. Exceeding a threshold means that the mechanical resistance of the vehicle has become too high, which indicates the presence of a non-displaceable obstacle, such as a cow or a human being. In this case, inversion of the orientation/direction of travel reduces the danger.

In embodiments, the vehicle further comprises a sensor which is arranged to supply a signal to the control unit upon recognizing a detecting means located on or in the ground. By means of said signal it is possible to additionally control the vehicle, for example along a preferred route, or to indicate boundaries of an area to be worked or a safety area, for example an area in which human beings may be present and to which, consequently, the vehicle should not have access.

In particular, the sensor comprises an inductive or optical sensor, and the detecting means comprises a conductive or magnetic detecting means or an optical detecting means such as a coloured surface. By means of such sensors and means, delimitation of a route or area, and changes thereof, can take place in a very effective manner. It is also possible to combine this sensor with the sensor means which recognizes the kind or condition of the ground and which has already been mentioned in the foregoing. It is thus possible for an optical camera to recognize not only a boundary or route, but also a sort of feed or type of ground.

In an embodiment of an unmanned vehicle according to the present invention, the control unit is programmed in such a manner that, for the control of the vehicle, priority is given to the distance determined by the distance determining means in combination with the pre-adjusted minimum distance. This prevents the unmanned vehicle from coming too close to the wall portion in the case of little feed lying on the ground. In particular in the case when the wall portion is a feed fence where animals, such as for example cows, are present, a too close approach to the animals might lead to an undesirably great unrest with the animals. Moreover, a too small distance to the wall portion might lead to an undesired accumulation of the feed.

In a preferred embodiment of an unmanned vehicle according to the invention, the pre-adjustable distance is adjustable during operation, thus in particular the distance from the vehicle to a wall portion. The adjustment may, for example, depend on the moment of the day, the period which has elapsed since the unmanned vehicle was present at the same position, the sort of animals or the individual animals which are present at the wall portion, for example a feed fence. In a preferred embodiment of an unmanned vehicle according to the present invention, the pre-adjusted maximum torque difference and/or the pre-adjusted orientation are/is also adjustable during operation.

The feed displacing means preferably comprise a freely rotatable annular, in particular circular, element whose outer circumference forms the outer circumference of the vehicle. In this case, no separate drive mechanism for the feed displacing means is needed, because the freely rotatable annular, in particular circular, element is driven by the feed itself (substantially by frictional engagement). If desired, the outer surface of the annular, in particular circular, element may be provided with one or more friction increasing layers and/or elements. In order to achieve a reliable, substantially lateral displacement of the feed, an embodiment of an unmanned vehicle according to the invention is characterized in that the annular, in particular circular, element is tilted in such a manner that, at least substantially in the direction of travel of the vehicle, it is located closest to the ground. If the angle enclosed by the annular, in particular circular, element and the ground is adjustable, it is possible to adjust the unmanned vehicle in such a manner that different sorts of feed are correctly displaced at least substantially transversely to the direction of travel of the vehicle.

The distance determining means preferably comprises an ultrasonic sensor. It is further advantageous if the unmanned vehicle is provided with a means for detecting skid of at least one of the drivable wheels.

If the unmanned vehicle is provided with an open bottom, material, such as feed, is prevented from accumulating in the interior of the vehicle and possibly adversely affecting there the operation of the unmanned vehicle.

According to an embodiment of an unmanned vehicle according to the invention, feed can be supplied if the unmanned vehicle is provided with a storage container for containing feed, and a discharge device for discharging feed towards the ground. The storage container is preferably provided with a mixing means for mixing feed. In this case, it is advantageous if the control unit controls the operation of the discharge device on the basis of data from the distance determining means and/or the torque difference determining means and/or the speed of the vehicle and/or the weight decrease of the storage container. Alternatively or additionally, the unmanned vehicle may be provided with a signalling means for supplying a signal (for example for drawing the attention of an owner and/or operator of the unmanned vehicle), the control unit controlling the operation of the signalling means on the basis of data from the distance determining means and/or the torque difference determining means.

The invention will now be explained in further detail with reference to the drawing, in which:
Figure 1 is a diagrammatic side view of the unmanned vehicle according to the invention, and
Figure 2 is a diagrammatic top view of the unmanned vehicle according to the invention for use in the case of displacing feed towards a feed fence.

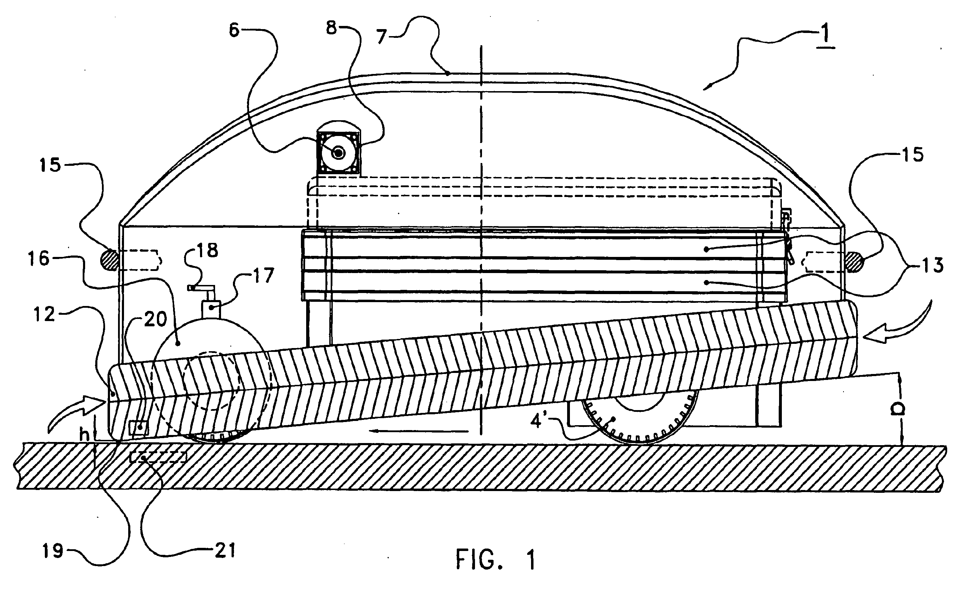

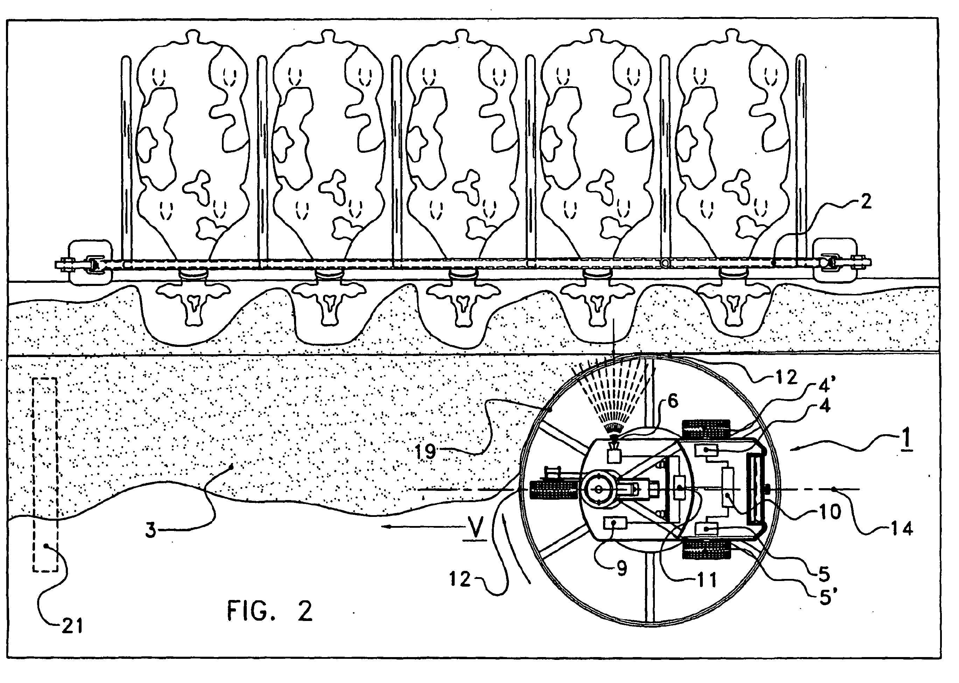

Figures 1 and 2 show an unmanned autonomous vehicle 1 for substantially lateral displacement of feed 3 lying on a ground towards a feed fence 2. The feed 3, which may be solid, liquid or a mixture thereof, has been deposited at the feed fence 2 in a manner known per se, for example by means of a tractor. It will be obvious that the present invention is also applicable in other devices for supplying feed to animals, so that the feed fence shown in Figure 2 is only one of the many examples of a wall portion in the vicinity of which feed can be deposited. In the present invention, by the term "wall portion" all forms of separating elements are meant, whether or not having an open structure, it being possible for the wall portion to assume many different, curved, rectilinear, angular, etc. shapes.

Autonomously displaceable vehicles, for performing numerous different functions, as well as the control of such vehicles, are known per se, and will consequently not be described here in detail. Automatic charging of the energy supply of the vehicle and automatic loading and unloading of other materials into and from, respectively, containers present on the vehicle are known as well. It is sufficient to refer to the following patent documents: US-2966256, DE-1109441, DE-1183301, EP-0382693, DE-4425924, US-5309592, EP-0142594, DE-4444508, GB-2313190, US-5109566, GB-2313191, US-3273038, NL-7416427, US-5341540, US-5646494, EP-0943235, EP-1369010, EP-1369012 en EP-1369017.

The unmanned vehicle 1 comprises two wheels 4', 5' which are drivable by separate drive means 4, 5. The unmanned vehicle 1 is further provided with a distance determining means 6, in the embodiment shown an ultrasonic sensor, for determining the distance from the vehicle 1 to the feed fence 2. It will be obvious that all sensors known in the art, such as for example the sensors mentioned in the patent documents summed up in the foregoing, may be used for determining the distance. The unmanned vehicle 1 may be provided with an external, protective covering 7, which is provided with apertures 8, so that the ultrasonic sensor 6 is enabled to detect the feed fence 2. In order to prevent material, such as feed and the like, from accumulating, via the apertures 8, in the interior of the unmanned vehicle 1, the bottom of the unmanned vehicle 1 is at least partially open. This also makes it possible to provide within the vehicle a pick-up device (not shown) for picking up material, for example dirt.

The unmanned vehicle 1 further comprises an orientation determining means 9, in the example shown a gyroscope, for determining the orientation of the centre line 14 of the vehicle 1 relative to the feed fence 2. It will be obvious that all sensors known in the art, such as for example the sensors mentioned in the patent documents summed up in the foregoing, may be used for orientation determination, such as an electronic compass or a camera with image recognition equipment.

The unmanned vehicle 1 is also provided with a torque difference determining device 10 for determining the torque difference between the wheels 4', 5'. Such a torque difference determining means, which uses data from the drive means 4, 5, is known per se. Such a torque difference determining means may also be used for detecting skid of one of the wheels, after which detection it is possible to perform a correct action (reduction of the number of revolutions, alarming an operator).

The unmanned vehicle 1 is further provided with a control unit 11 for controlling the unmanned vehicle 1 and moving it in a direction of travel, which control unit 11 is connected, via electric wires or, if desired, in a wireless manner, to the distance determining means 6, the orientation determining means 9, the torque difference determining means 10, and the drive mechanisms 4, 5 of the wheels 4', 5' for exchanging data.

For displacing feed 3 substantially transversely to the direction of travel V of the unmanned vehicle, the unmanned vehicle 1 is provided with feed displacing means 12. Such feed displacing means may be constituted by an obliquely disposed slide, or by a conveyor belt. However, according to an embodiment of the invention, said feed displacing means 12 are preferably constituted by a freely rotatable circular element 12, whose outer circumference forms the outer circumference of the unmanned vehicle 1. When, during the operation of the unmanned vehicle 1, the annular, in particular circular, element 12, which may for example be a ring or a disc, comes into contact with the feed, said element 12 is automatically rotated, in other words, the annular, in particular circular, element 12 is feed driven. An extremely reproducible displacement of the feed is achieved if the annular, in particular circular, element 12 is tilted in such a manner under an angle α, that, at least substantially in the direction of travel V of the vehicle 1, it is located closest to the ground. In dependence on the feed to be displaced, the angle α enclosed by the annular, in particular circular, element 12 and the ground may be adjustable. If desired, during operation of the vehicle 1, the angle α is adjustable by (not shown) tilting means known per se, such as a cylinder, which are controlled by the control unit 11.

A protective device, in the form of a circumferential ring, is denoted by 15. Said ring comprises for example conductive material, such that the electric resistance will change when pressure is exerted on the ring 15. Said resistance change may, for example, be used by the control unit 11 to carry out a matching action, such as inversion of the orientation V. The height of the ring may be selected in dependence on obstacles to be expected, in which case an expected maximum height of the feed 3 may also be taken into account. Incidentally, also the sensitivity of the ring 15 may be selected in such a manner that the maximum mechanical resistance to be exerted by the feed 3 is insufficient to cause the vehicle to turn.

Moreover, the vehicle shown comprises an additional wheel 16 and an adjusting device, comprising a wheel suspension 17 with a height adjustment 18. The additional wheel may serve to reduce the load, and consequently the wear, of the element 12, and may alternatively also comprise for example a sliding shoe or the like. The wheel suspension 17 and the height adjustment 18 may serve to adapt the height h of the lowest point 19 of the element 12 to, for example, the type of feed or the surface condition of the ground.

The height adjustment is also fitted on at least one of the wheels 4', or even on all wheels. As a result thereof, the lowest point 19 may, for example, be displaced to outside the centre line. In Figure 2, said lowest point 19 is displaced to the right, for example by lifting the left wheel, or by lowering the right wheel.

Upon depositing the feed on the ground, and during eating of the feed by animals present at the feed fence, the feed is accumulated to different heights over different distances to the feed fence. In order that the animals will always be able to get at a desired amount of feed in a simple manner, it is ensured that feed is displaced to the feed fence by having the unmanned vehicle regularly move along the feed fence 2, as diagrammatically shown in Figure 2. In order that the unmanned vehicle 1 is correctly controlled, the control unit 11 is programmed in such a manner that, during operation, the vehicle 1 will be kept at a distance to the feed fence 2, which distance is determined by the distance determining means 9 and is greater than or equal to a pre-adjusted minimum distance to the feed fence, and that, during operation, the centre line 14 of the vehicle will remain in an orientation determined by the orientation determining means 9 relative to the feed fence 2, which orientation is at least substantially equal to a pre-adjusted orientation, and that, during operation, the drivable wheels 4', 5' of the unmanned vehicle 1 will show a torque difference determined by the torque difference determining means 10, which torque difference is smaller than or equal to a pre-adjusted maximum torque. This means that the unmanned vehicle 1 will always maintain a correct orientation relative to the feed fence 2, that the unmanned vehicle 1 will not come within the minimum distance to the feed fence 2, and that it is ensured that the feed will not be accumulated too much, because, in the case of the unmanned vehicle 1 moving through a too large amount of feed, the torque difference would become too great.

The control unit 11 is programmed in such a manner that, for controlling the unmanned vehicle 1, priority is given to the distance determined by the distance determining means 6 in combination with the pre-adjusted minimum distance.

In a preferred embodiment of an unmanned vehicle 1, the pre-adjustable distance is adjustable during operation. The adjustment may, for example, depend on the moment of the day, the period which has elapsed since the unmanned vehicle was present at the same position, the sort of animals or the individual animals which are present at the feed fence. In a preferred embodiment of an unmanned vehicle, the pre-adjusted maximum torque difference and/or the pre-adjusted orientation are/is also adjustable during operation.

The unmanned autonomous vehicle 1 is provided with a (non-shown) energy supply which is chargeable via laterally disposed charging strips 13 that are capable of being brought into contact with a charging device. Other ways of charging the energy supply, such as inductive means, are mentioned inter alia in the above-mentioned patent documents.

Moreover, the vehicle shown is provided with an inductive sensor 20 which is capable of detecting an induction strip 21 fitted in the ground. The sensor 20 is coupled to the control unit 11 which, in response to a received signal, is capable of, for example, turning the vehicle, or the like. Alternatively, the strip 21 may also be fitted on the ground or comprise, for example, an optically recognizable strip. In the latter case, the sensor 20 is, of course, an optical sensor, provided with a radiation source, if desired.

The adjustment in height and/or position, for example by the height adjustment, could also be controlled automatically, for example by means of the control unit 11. Such a control may, for example, take place when the vehicle leaves the area where feed is located or is expected to be located. Upon leaving said area, it is favourable to lift the feed displacing means. Owing to the greater distance to the ground, it is possible for the vehicle to remain cleaner, or to overcome a more uneven ground, such as a grid or a threshold. For this purpose, there may be provided an additional sensor (not shown) having such a functionality, such as a camera with image recognition equipment. Alternatively, the sensor 20 may, for example, also be equipped in this manner, or the ultrasonic detector 6 may, for example, be designed accordingly, such as rotatable towards the ground. It is also possible to indicate per area which adjustment is desired, by means of the sensor 20, for example in the form of an inductive sensor or an optical sensor, and with the aid of the detection strip 21.

Although not shown in the figures, the unmanned vehicle 1 may additionally be arranged to supply feed. For this purpose, the unmanned vehicle 1 may be provided with a storage container for containing feed, and a discharge device for discharging feed towards the ground. The storage container is preferably provided with a mixing means for mixing feed. In this case, it is advantageous if the control unit controls the operation of the discharge device on the basis of data from the distance determining means and/or the torque difference determining means and/or the speed of the vehicle and/or the weight decrease of the storage container. This makes it possible, inter alia, to supply a uniform amount of feed. When, for example, at a certain distance to the feed fence the torque difference comes below a particular value (for example in a search table stored in a memory of the control unit), the amount of feed has decreased below a particular value. On the basis of these data, it is possible for the discharge device to deposit a certain amount of feed on that place of the ground. Alternatively or additionally, the unmanned vehicle 1 may be provided with a signalling means (for example a transmitting aerial with a suitable controlling transmitter circuit) for supplying a signal (for example for drawing the attention of an owner and/or operator of the unmanned vehicle), the control unit controlling the operation of the signalling means on the basis of data from the distance determining means and/or the torque difference determining means. The control is also based on the insight that the magnitude of the torque difference depends on the amount of feed present on the ground through which the unmanned vehicle is moving, and said torque difference may thus be used in an advantageous manner, together wit the determined distance and orientation, for a correct control of the unmanned vehicle.

## Claims

1. Unmanned autonomous vehicle (1) for substantially lateral displacement of feed lying on a ground, comprising:
- two wheels, in particular wheels (4', 5') which are separately drivable by separate drive means (4, 5),
- a torque difference adjusting means (10) for adjusting the torque difference between the wheels (4', 5'),
- a control unit (11) for controlling the vehicle and moving it in a direction of travel, and
- feed displacing means (12) for substantially lateral displacement of feed,
further comprising an adjusting device (18) which is arranged to adjust the position of a lowest point (19) of the feed displacing means (12), **characterized in that** the adjusting device comprises a vehicle tilting device which is arranged in such a manner that the lowest point (19) will be located at least substantially outside the centre line (14) of the vehicle (1) wherein the lowest point is displaceable to the left or to the right.

2. Unmanned verhicle according to claim 1, wherein the adjusting device is arranged to adjust the height of the feed displacement means.

3. Unmanned vehicle according to claim 1 or 2, further comprising an additional supporting point (16), in particular a sliding shoe or a third wheel.

4. Unmanned vehicle according to any one of the preceding claims, **characterized in that** the adjusting device (18) comprises a height adjustment (18) which is arranged to adjust the height of at least one of a wheel (4', 5') and the additional supporting point (16).

5. Unmanned vehicle according to any one of the preceding claims, **characterized in that** the adjusting device (18) is arranged for an automatic height adjustment, in particular such an automatic height adjustment that the feed displacing means (12) will exert a substantially constant pressure on a ground.

6. Unmanned vehicle according to any one of the preceding claims, **characterized in that** the unmanned vehicle is provided with an orientation determining means (9) to determine the orientation of the centre line (14) of the vehicle relative to the wall portion, wherein the control unit (11) is programmed in such a manner that, during operation, the centre line (14) of the vehicle will remain in an orientation determined by the orientation determining means (9) relative to the wall portion, which orientation is at least substantially equal to a pre-adjusted orientation.

7. Unmanned vehicle according to any one of the preceding claims, further comprising a touch protection (15) which extends around the outer side of the vehicle (1) and which is arranged to supply to the control unit (11) a signal which depends on an encountered force or pressure.

8. Unmanned vehicle according to claim 7, **characterized in that** the control unit (11) is arranged to change the orientation when the signal exceeds a particular threshold, in particular to inverse the orientation.

9. Unmanned vehicle according to any one of the preceding claims, further comprising a sensor (20) which is arranged to supply a signal to the control unit (11) upon recognizing a detecting means (21) located on or in the ground.

10. Unmanned vehicle according to claim 9, **characterized in that** the sensor (20) comprises an inductive or optical sensor, and **in that** the detecting means (21) comprises a conductive or magnetic detecting means or an optical detecting means such as a coloured surface.

11. Unmanned vehicle according to any one of the preceding claims, further comprising a sensor means which recognizes the kind or condition of the ground, wherein the control device is arranged to adjust, by means of a signal from the sensor means, the height (h) and/or the position of the feed displacing means (12), in particular of a lowest point (19) thereof.

12. Unmanned vehicle according to any one of the preceding claims, **characterized in that** the pre-adjustable distance is adjustable during operation.

13. Unmanned autonomous vehicle according to any one of claims 6-12, **characterized in that** the pre-adjusted orientation is adjustable during operation.

14. Unmanned autonomous vehicle according to any one of the preceding claims, **characterized in that** the feed displacing means (12) comprise a freely rotatable annular, in particular circular, element whose outer circumference forms the outer circumference of the vehicle, and which in particular
is tilted in such a manner that, at least substantially in the direction of travel of the vehicle, the lowest point (19) is located closest to the ground.

15. Unmanned autonomous vehicle according to any one of the preceding claims, **characterized in that** the unmanned vehicle is provided with a storage container for containing feed, and with a discharge device for discharging feed towards the ground, wherein, in particular, the control unit controls the operation of the discharge device on the basis of data from the distance determining means (6) and/or the torque difference determining means (10) and/or the speed of the vehicle and/or the weight decrease of the storage container.

## Patentansprüche

1. Unbemanntes autonomes Fahrzeug (1) zum im Wesentlichen seitlichen Verschieben von Futter, das auf einem Boden liegt, umfassend:
- zwei Räder, insbesondere Räder (4', 5'), die durch gesonderte Antriebsmittel (4, 5) gesondert antreibbar sind;
- ein Drehmomentdifferenzeinstellmittel (10), um die Drehmomentdifferenz zwischen den Rädern (4', 5') einzustellen,
- eine Steuereinheit (11), um das Fahrzeug zu steuern und es in eine Fortbewegungsrichtung zu bewegen, und
- ein Futterverschiebungsmittel (12), um Futter im Wesentlichen seitlich zu verschieben,
ferner umfassend eine Einstellvorrichtung (18), die dazu eingerichtet ist, die Position eines niedrigsten Punkts (19) des Futterverschiebungsmittels (12) einzustellen,
**dadurch gekennzeichnet, dass** die Einstellvorrichtung eine Fahrzeugkippvorrichtung umfasst, welche auf eine solche Weise eingerichtet ist, dass der niedrigste Punkt (19) zumindest im Wesentlichen außerhalb der Mittellinie (14) des Fahrzeugs (1) angeordnet wird, wobei der niedrigste Punkt nach rechts oder nach links verschiebbar ist.

2. Unbemanntes Fahrzeug nach Anspruch 1,
wobei die Einstellvorrichtung dazu eingerichtet ist, die Höhe des Futterverschiebungsmittels einzustellen.

3. Unbemanntes Fahrzeug nach Anspruch 1 oder 2,
ferner umfassend einen zusätzlichen Auflagepunkt (16), insbesondere einen Gleitschuh oder ein drittes Rad.

4. Unbemanntes Fahrzeug nach einem der vorhergehenden Ansprüche,
**dadurch gekennzeichnet, dass** die Einstellvorrichtung (18) eine Höheneinstellung (18) umfasst, die dazu eingerichtet ist, die Höhe zumindest eines aus einem Rad (4', 5') und dem zusätzlichen Auflagepunkt (16) einzustellen.

5. Unbemanntes Fahrzeug nach einem der vorhergehenden Ansprüche,
**dadurch gekennzeichnet, dass** die Einstellvorrichtung (18) für eine automatische Höheneinstellung, insbesondere eine derartige Höheneinstellung, dass das Futterverschiebungsmittel (12) einen im Wesentlichen konstanten Druck auf einen Boden ausüben wird, eingerichtet ist.

6. Unbemanntes Fahrzeug nach einem der vorhergehenden Ansprüche,
**dadurch gekennzeichnet, dass** das unbemannte Fahrzeug mit einem Ausrichtungsbestimmungsmittel (9) versehen ist, um die Ausrichtung der Mittellinie (14) des Fahrzeugs in Bezug auf den Wandabschnitt zu bestimmen, wobei die Steuereinheit (11) auf eine solche Weise programmiert ist, dass die Mittellinie (14) des Fahrzeugs während des Betriebs in einer durch das Ausrichtungsbestimmungsmittel (9) bestimmten Ausrichtung in Bezug auf den Wandabschnitt bleiben wird, welche Ausrichtung einer voreingestellten Ausrichtung zumindest im Wesentlichen gleich ist.

7. Unbemanntes Fahrzeug nach einem der vorhergehenden Ansprüche,
ferner umfassend einen Berührungsschutz (15), der sich um die Außenseite des Fahrzeugs (1) erstreckt und dazu eingerichtet ist, ein Signal, das von einer begegneten Kraft oder einem begegneten Druck abhängt, zur Steuereinheit (11) zu liefern.

8. Unbemanntes Fahrzeug nach Anspruch 7,
**dadurch gekennzeichnet, dass** die Steuereinheit (11) dazu eingerichtet ist, die Ausrichtung zu verändern, und insbesondere die Ausrichtung umzukehren, wenn das Signal eine bestimmte Schwelle überschreitet.

9. Unbemanntes Fahrzeug nach einem der vorhergehenden Ansprüche,
ferner umfassend einen Sensor (20), der dazu eingerichtet ist, bei Erkennen eines Detektionsmittels (21), das sich am oder im Boden befindet, ein Signal zur Steuereinheit (11) zu liefern.

10. Unbemanntes Fahrzeug nach Anspruch 9,
**dadurch gekennzeichnet, dass** der Sensor (20) einen induktiven oder optischen Sensor umfasst, und dass das Detektionsmittel (21) ein leitfähiges oder magnetisches Detektionsmittel oder ein optisches Detektionsmittel wie etwa eine farbige Fläche umfasst.

11. Unbemanntes Fahrzeug nach einem der vorhergehenden Ansprüche,
ferner umfassend ein Sensormittel, das die Art oder den Zustand des Bodens erkennt, wobei die Steuervorrichtung dazu eingerichtet ist, mittels eines Signals vom Sensormittel die Höhe (h) und/oder die Position des Futterverschiebungsmittels (12), insbesondere eines niedrigsten Punkts (19) davon, einzustellen.

12. Unbemanntes Fahrzeug nach einem der vorhergehenden Ansprüche,
**dadurch gekennzeichnet, dass** der voreinstellbare Abstand während des Betriebs einstellbar ist.

13. Unbemanntes autonomes Fahrzeug nach einem der Ansprüche 6 bis 12,
**dadurch gekennzeichnet, dass** die voreingestellte Ausrichtung während des Betriebs einstellbar ist.

14. Unbemanntes autonomes Fahrzeug nach einem der vorhergehenden Ansprüche,
**dadurch gekennzeichnet, dass** das Futterverschiebungsmittel (12) ein frei drehbares ringförmiges, insbesondere kreisförmiges, Element umfasst, dessen Außenumfang den Außenumfang des Fahrzeugs bildet, und welches insbesondere auf eine solche Weise geneigt ist, dass sich der niedrigste Punkt (19) zumindest im Wesentlichen in der Fortbewegungsrichtung des Fahrzeugs am nächsten zum Boden befindet

15. Unbemanntes autonomes Fahrzeug nach einem der vorhergehenden Ansprüche,
**dadurch gekennzeichnet, dass** das unbemannte Fahrzeug mit einem Lagerbehälter zur Aufnahme von Futter und mit einer Abgabevorrichtung zum Abgeben von Futter zum Boden versehen ist, wobei im Besonderen die Steuereinheit den Betrieb der Abgabevorrichtung auf der Basis von Daten vom Abstandsbestimmungsmittel (6) und/oder vom Drehmomentdifferenzbestimmungsmittel (10) und/oder der Geschwindigkeit des Fahrzeugs und/oder der Gewichtsabnahme des Lagerbehälters steuert.

## Revendications

1. Véhicule autonome sans pilote (1) pour le déplacement sensiblement latéral d'aliments reposant sur un sol, comprenant :
- deux roues, en particulier des roues (4', 5') qui peuvent être entraînées séparément par des moyens d'entraînement (4, 5) séparés,
- des moyens d'ajustement de différence de couple (10) pour ajuster la différence de couple entre les roues (4', 5'),
- une unité de commande (11) pour commander le véhicule et le déplacer dans une direction de déplacement, et
- des moyens de déplacement d'aliments (12) pour le déplacement sensiblement latéral d'aliments, comprenant en outre un dispositif d'ajustement (18) qui est agencé pour ajuster la position d'un point le plus bas (19) des moyens de déplacement d'aliments (12), **caractérisé en ce que** le dispositif d'ajustement comprend un dispositif d'inclinaison de véhicule qui est agencé d'une manière telle que le point le plus bas (19) sera situé au moins sensiblement à l'extérieur de la ligne centrale (14) du véhicule (1), dans lequel le point le plus bas peut être déplacé vers la gauche ou vers la droite.

2. Véhicule sans pilote selon la revendication 1, **caractérisé en ce que** le dispositif d'ajustement est agencé pour ajuster la hauteur des moyens de déplacement d'aliments.

3. Véhicule sans pilote selon la revendication 1 ou 2, comprenant en outre un point de support (16) supplémentaire, en particulier un patin de glissement ou une troisième roue.

4. Véhicule sans pilote selon l'une quelconque des revendications précédentes, **caractérisé en ce que** le dispositif d'ajustement (18) comprend un ajustement de hauteur (18) qui est agencé pour ajuster la hauteur d'au moins une des roues (4', 5') et du point de support (16) supplémentaire.

5. Véhicule sans pilote selon l'une quelconque des revendications précédentes, **caractérisé en ce que** le dispositif d'ajustement (18) est agencé pour un ajustement de hauteur automatique, en particulier un ajustement de hauteur automatique tel que les moyens de déplacement d'aliments (12) exerceront une pression sensiblement constante sur un sol.

6. Véhicule sans pilote selon l'une quelconque des revendications précédentes, **caractérisé en ce que** le véhicule sans pilote est pourvu de moyens de détermination d'orientation (9) pour déterminer l'orientation de la ligne centrale (14) du véhicule par rapport à la partie de paroi, dans lequel l'unité de commande (11) est programmée de manière à ce que, en fonctionnement, la ligne centrale (14) du véhicule reste dans une orientation déterminée par les moyens de détermination d'orientation (9) par rapport à la partie de paroi, laquelle orientation est au moins sensiblement identique à une orientation ajustée au préalable.

7. Véhicule sans pilote selon l'une quelconque des revendications précédentes, comprenant en outre une protection tactile (15) qui s'étend autour du côté extérieur du véhicule (1) et qui est agencée pour fournir à l'unité de commande (11) un signal qui est fonction d'une force ou d'une pression rencontrée.

8. Véhicule sans pilote selon la revendication 7, **caractérisé en ce que** l'unité de commande (11) est agencée pour modifier l'orientation lorsque le signal dépasse un seuil particulier, en particulier pour inverser l'orientation.

9. Véhicule sans pilote selon l'une quelconque des revendications précédentes, comprenant en outre un capteur (20) qui est agencé pour fournir un signal à l'unité de commande (11) lors de la reconnaissance de moyens de détection (21) situés sur ou dans le sol.

10. Véhicule sans pilote selon la revendication 9, **caractérisé en ce que** le capteur (20) comprend un capteur inductif ou optique, et **en ce que** les moyens de détection (21) comprennent des moyens de détection conductifs ou magnétiques ou des moyens de détection optiques tels qu'une surface colorée.

11. Véhicule sans pilote selon l'une quelconque des revendications précédentes, comprenant en outre des moyens formant capteur qui reconnaissent le type ou la condition du sol, dans lequel le dispositif de commande est agencé pour ajuster, au moyen d'un signal provenant des moyens formant capteur, la hauteur (h) et/ou la position des moyens de déplacement d'aliments (12), en particulier d'un point le plus bas (19) de ceux-ci.

12. Véhicule sans pilote selon l'une quelconque des revendications précédentes, **caractérisé en ce que** la distance ajustable au préalable peut être ajustée en fonctionnement.

13. Véhicule autonome sans pilote selon l'une quelconque des revendications 6 à 12, **caractérisé en ce que** l'orientation ajustée au préalable peut être ajustée en fonctionnement.

14. Véhicule autonome sans pilote selon l'une quelconque des revendications précédentes, **caractérisé en ce que** les moyens de déplacement d'aliments (12) comprennent un élément annulaire, en particulier circulaire, capable de tourner librement dont la circonférence extérieure forme la circonférence extérieure du véhicule et qui, en particulier, est incliné d'une manière telle que, au moins sensiblement dans la direction de déplacement du véhicule, le point le plus bas (19) est situé le plus près du sol.

15. Véhicule autonome sans pilote selon l'une quelconque des revendications précédentes, **caractérisé en ce que** le véhicule sans pilote est pourvu d'un contenant de stockage pour contenir des aliments, et d'un dispositif de déchargement pour décharger les aliments vers le sol, dans lequel, en particulier, l'unité de commande commande le fonctionnement du dispositif de déchargement sur la base de données provenant des moyens de détermination de distance (6) et/ou des moyens de détermination de différence de couple (10) et/ou de la vitesse du véhicule et/ou de la diminution de poids du contenant de stockage.
